# EUROPEAN PATENT APPLICATION

(11) **EP 4 516 957 A1**
(43) Date of publication of application: **05.03.2025**
(21) Application number: 23193721.0
(22) Date of filing: 28.08.2023
(51) Int. Cl.: C23C 8/24, C25B 1/04, C25B 9/75, C25B 9/77, H01M 8/0206, H01M 8/0215, H01M 8/0228, H01M 8/0254, H01M 8/0297, H01M 8/10

(54) **BIPOLAR PLATE WITH A TITANIUM NITRIDE COATING**

(71) Applicant: Sungrow Deutschland GmbH, 81541 München (DE)
(72) Inventor: LIU, Fang, 81541 München (DE); GARCIA TORREGROSA, Ivan, 81541 München (DE)
(74) Representative: V.O.

(57) **Abstract**

In accordance with a first aspect of the invention there is provided a method for coating a bipolar plate, comprising the steps of: - providing a bipolar plate wherein at least the outside layer of the bipolar plate comprises metallic titanium; - subjecting the bipolar plate to laser nitridation, thereby forming a coating of titanium nitride on the outer surface of the bipolar plate.

The inventors have found that laser nitridation of titanium bipolar plates results in bipolar plates comprising a highly stable TiN coating with good conformality, chemical stability, and/or high electrical conductivity. Furthermore, applying a TiN coating by laser nitridation can be integrated well in the production of the bipolar plate, for instance in a roll-to-plate process that involves laser welding, and is efficient and simple compared to deposition methods known in the art. The TiN coating on the bipolar plate can for instance be used directly in an electrochemical reactor, or can serve as a substrate for further coatings.

## Description

### BACKGROUND OF THE INVENTION

The invention is in the field of electrochemistry. In particular the present invention is directed to a method for producing a bipolar plate and to a bipolar plate obtainable by that method.

Electrochemical reactors are widely used in different fields of technology. Well-known examples of electrochemical reactors that are used in generation and storage of energy are fuel cells and electrolyzers. Other applications for electrochemical reactors include reactors for reduction of CO₂, which can be used for reducing CO₂ emissions, while at the same time producing valuable fuels or chemicals.

Different types of electrochemical reactors exist, which are often categorized based on their electrolyte material. Well known types of electrochemical reactors Proton Exchange Membrane (PEM) reactors, Anion Exchange Membrane (AEM) reactors, alkaline reactors and solid oxide reactors. In many cases, in order to scale up the reactions, electrochemical reactors are applied in the form of a stack of reactors. An important part in electrochemical reactors, and in particular of stacks of reactors, is the bipolar plate.

Bipolar plates server multiple functions. For instance, they isolate individual cells in a stack, conduct current between cells, facilitate water and thermal management through the cell, and provide conduits for providing reactant gases to the reactor as well as removing reaction products from the reactor.

Currently, bipolar plates are typically produced via stamping or hydroforming metal sheets. Typically, an anodic plate and a cathodic plate are welded together, to form a robust unified bipolar plate. This welding can for instance be done using laser welding. In some cases, especially in fuel cells, carbon bipolar plates are also used instead of metal bipolar plates.

The produced plates typically also undergo a step in which a coating of a chemically stable and electrically conductive material is applied on both the anode and cathode sides of the bipolar plate. Coating methods include electroplating, physical vapor deposition (PVD), and chemical vapor deposition (CVD). Typically, noble metals such as gold or platinum group metals (PGMs) are used to coat the bipolar plate.

However, there are downsides to using noble metals for providing bipolar plates with a chemically stable and electrically conductive coating. For instance, due to scarceness and price of the material used and thickness of the deposited layers, bipolar plates with noble metal coatings are relatively expensive, thereby having a negative impact on CapEx related to devices in which bipolar plates are applied.

In addition, applying a coating to bipolar plates can be cumbersome, because thorough cleaning of the surface of the bipolar plates is necessary before applying the coating, in order to make sure that the coating properly adheres to the surface. Applying the coating layer in such a way has to be done carefully in order to obtain a coating surface that is free of pores, pinholes and cracks. In order to prevent defects in the coating layer that leave underlying layers exposed, relatively thick coating layers are applied (*e.g*. 5 µm), making bipolar plates even more expensive.

Also, the sharp interface between the metal to be coated and the applied coating layer can be a weak point where defects can form.

Recently, instead of noble metal coatings, titanium nitride (TiN) has been used as a less expensive coating material for bipolar plates. Titanium nitride has good chemical resistance, hardness and electrical conductivity. Compared to metallic titanium, TiN has low H₂ uptake, and a TiN coating can therefore act as a hydrogen barrier and protect titanium against hydrogen embrittlement. In addition, TiN coatings provide low interfacial resistance in electrochemical reactors between the bipolar plate and the porous transport layer, e.g. down to 10 mΩ.

Typical methods for the application of TiN coatings involve electroplating, physical or chemical vapor deposition, or other additive processes that build up a layer of material onto a substrate.

However, bipolar plates with TiN coatings also have downsides. For instance, it is very important that the entire bipolar plate is covered with protective material and that the coating is strong enough in terms of chemical and mechanical stability. Due to variations in thickness and chemical stability, it is typically needed to have an average thickness of the TiN of up to 5 µm or even higher in order make sure that there are no defects in the coating.

Another downside is that the chemical stability of TiN nitride is lower than that of noble metals. For instance, under the influence of oxygen, titanium oxynitrides with the general formula TiOₓN_{y} may be formed, which can negatively affect the stability and/or electrical conductivity of the bipolar plate. The stability of TiN against oxynitride formation is highly affected by the stoichiometry and phases present in the compound.

In addition, the chemical stability of TiN can be affected by the crystallite size and grain border, and the interface between metal substrate and TiN coating can be difficult to control.

It is generally very difficult to produce stoichiometric TiN coatings using deposition techniques such as PVD or CVD without a post-treatment under high temperatures. Annealing post-treatments are frequently needed to improve the crystallinity and adhesion of the coatings prepared by PVD. Best coatings in terms of electrical conductivity and interface adhesion require heat treatment > 1050 °C.

An object of the invention is to produce bipolar plates with good properties, for instance high chemical resistance and/or good electrical conductivity.

Another object of the invention is to provide an efficient method for producing such bipolar plates, while addressing at least one of the downsides of known methods.

Another object of the invention is to produce bipolar plates in a practical and/or cost-effective way.

### BRIEF SUMMARY OF THE INVENTION

In accordance with a first aspect of the invention there is provided a method for coating a bipolar plate, comprising the steps of: - providing a bipolar plate wherein at least the outside layer of the bipolar plate comprises metallic titanium; - subjecting the bipolar plate to laser nitridation, thereby forming a coating of titanium nitride on the outer surface of the bipolar plate.

The inventors have found that laser nitridation of titanium bipolar plates results in bipolar plates comprising a highly stable TiN coating with good conformality, chemical stability, and/or high electrical conductivity. Furthermore, applying a TiN coating by laser nitridation can be integrated well in the production of the bipolar plate, for instance in a roll-to-plate process that involves laser welding, and is efficient and simple compared to deposition methods known in the art. The TiN coating on the bipolar plate can for instance be used directly in an electrochemical reactor, or can serve as a substrate for further coatings.

According to a second aspect of the invention, there is provided a bipolar plate obtainable by the method according to the first aspect of the invention.

There is also provided the use of a bipolar plate obtainable by the method as described herein in an electrochemical reactor, wherein the electrochemical reactor is preferably selected from the group consisting of an electrolyzer and a fuel cell.

### BRIEF DESCRIPTION OF THE DRAWINGS

Figure 1 is a schematic representation of a cross section of a cell in an electrochemical membrane reactor.
Figure 2 is a schematic representation of the production of a bipolar plate with a coating.
Figure 3 is a schematic representation of the production of a bipolar plate with a coating in a roll-to-plate process.

### DETAILED DESCRIPTION OF THE INVENTION

In accordance with a first aspect of the invention there is provided a method for producing a bipolar plate with a coating. Preferably, the bipolar plate is suitable for being used in an electrochemical reactor. The method as disclosed herein comprises the steps of: - providing a bipolar plate wherein at least the outside layer of the bipolar plate comprises metallic titanium; - subjecting the bipolar plate to laser nitridation, thereby forming a coating of titanium nitride on the outer surface of the bipolar plate.

Laser nitridation, as used herein, refers to a sub-class of thermal nitridation, in which a laser source is used to heat the titanium surface in the presence of a nitrogen source. This results in the formation of TiN on the outer surface of the bipolar plate. In comparison with classical thermal nitridation, in which an entire part has to be heated in an oven to temperatures of ca. 1200 °C, laser nitridation involves heating the material to be coated very locally using a laser, which makes laser nitridation faster, more energy-efficient, and more easily integrated with continuous production processes than classical thermal nitridation.

Preferably, laser nitridation is performed at an ambient temperature of 80 °C or less, more preferably 50 °C or less, such as 40 °C or less. Locally, the temperature can be much higher due to the laser heating up the part of the bipolar plate being coated.

Laser nitridation of the bipolar plate results in formation of a TiN coating at the outer surface of the bipolar plate. Because the coating involves chemical reaction of the outer layer of the bipolar plate itself instead of deposition of a layer on top of the bipolar plate, the process does not significantly modify the component dimensions. Instead, laser nitridation process only affects the chemical structure of outside surface of the bipolar plate.

Another advantage compared to deposited coatings is that nitrogen is incorporated into the titanium framework, thereby forming titanium nitride. Therefore, compared to deposition of titanium nitride on a surface, laser nitridation does not lead to a sharp interface between the substrate and deposited material. Instead, laser nitridation results in a gradient of nitrogen concentration along the sample depth, wherein in the outer layers a Ti : N ratio close to 1 : 1 is obtained, and wherein the Ti : N ratio increases with increasing depth.

Using laser nitridation, a coating with good chemical resistance and/or high electrical conductivity can be produced. Without wishing to be bound by theory, the inventors believe that this is caused by the fact that laser nitridation leads to TiN with a Ti : N atomic ratio that is close to the ideal atomic ratio of 1 : 1 at the outer surface of the bipolar plate, especially in comparison to TiN coatings that are obtained by deposition.

The stoichiometric Ti : N ratio can be measured using different techniques. In addition to X-ray diffraction which is mostly a bulk technique, X-ray Photoelectron Spectroscopy (XPS) or TEM-EDX on a sample prepared using FIB-SEM can be used to determine a profile of the stoichiometric ratio of Ti : N along the depth of bipolar plate.

Preferably, the atomic ratio of titanium : nitrogen at the outer surface of the titanium nitride layer, for instance in the outermost 50 nm of the titanium nitride coating, is in the range of 0.8 : 1.0 - 1.2 : 1.0 , more preferably 0.9 : 1.0 - 1.1 : 1.0. It will be appreciated that a higher Ti : N ratio will be seen in deeper layers of the bipolar plate after laser nitridation, as discussed above, but because these deeper layers are not exposed at the outer surface, this ratio does not negatively affect chemical stability of the coated bipolar plate.

Because of the low electrical resistivity and the high chemical stability of TiN, the TiN coating can reduce the interfacial contact resistance between components in an electrochemical reactor, for instance between the bipolar plate and the porous transport layer.

The TiN coating layer can be applied to the anode side or the cathode side of the bipolar plate, or to both the anode and the cathode side.

The degree of absorption of the laser energy by the bipolar plate, and the resulting penetration depth of the laser used is important for *e.g.* the coating thickness, and may depend on the wavelength of the laser source. Preferably, laser nitridation is performed using a laser having a wavelength in the range of 900-2000 nm.

Laser nitridation may be performed using a pulsed and/or a continuous laser source. A pulsed laser might be preferred in some cases, because it leads to less unwanted heating of the bipolar plate during laser nitridation.

In order to be able to apply the coating in a short time, the laser preferably has power of 500 W or more, preferably 1000 W or more. For instance, the laser source may have has a laser power of 1000-50000 W, preferably 5000-25000 W.

Particularly good results and efficiencies can be achieved when laser nitridation is performed using a diode laser, because this type of laser has a high efficiency, and advantageously, large spot sizes can be achieved, meaning that it is possible to apply coatings to a large surface area in a short time.

In embodiments, the spot size of the laser used for laser nitridation is in the range of 10-10000 mm². If the laser has a small spot size relative to the size of the bipolar plate, laser nitridation can be performed by scanning the surface of the bipolar plate along two dimensions with the laser spot. However, a larger laser spot that is elongated along one direction (*i.e.*, a laser spot in the shape of a line) or elongated along two directions may also be used. In that case, scanning with the laser spot along two directions of the bipolar plate may not be necessary. Instead, it may be enough to move the laser spot and the bipolar plate relative to each other only in one direction. This makes it convenient to integrate the step of laser nitridation with continuous production of bipolar plates, for instance using a roll-to-plate process, as described below.

Laser nitridation is preferably carried out using nitrogen gas as nitrogen source. Alternatively or additionally, ammonia gas can for instance be used as nitrogen source. Compared to using nitrogen, ammonia gas can be used to decrease the temperature that it required for laser nitridation.

It is not necessary to add a titanium source in the coating process, because the metallic titanium outside surface of the bipolar plate itself is titanium source in the laser nitridation process.

In order to get good quality titanium nitride coatings, laser nitridation is preferably carried out in an atmosphere wherein the oxygen content is below 100 ppm or less, preferably 50 ppm or less, more preferably 30 ppm or less. Such low oxygen levels can be achieved for instance by providing a flow of the nitrogen source that displaces any oxygen that might be present and/or mixing the nitrogen source with a heavier gas such as argon.

The laser nitridation coating process can be synergistically combined with other steps in the production of bipolar plates. For instance, laser nitridation can be performed using the same equipment as for laser welding of cathode and anode plates, without needing to transport the bipolar plates to a different machine and/or cleaning the surface. Such steps would typically be needed for deposition-based coating processes. Therefore, efficiency of bipolar plate production can be increased, while keeping productions costs low. Laser nitridation can be performed on the bipolar plate after laser welding, and/or on the cathode and/or anode plate before laser welding. Preferably, laser nitridation is performed after laser welding, in order to prevent that laser welding might disturb the titanium nitride coating.

Typically, different types of laser sources will be used for laser welding and laser nitridation, because laser nitridation is directed at the outer surface of the bipolar plate, whereas laser welding is directed to deeper layers of the bipolar plate. However, other equipment such as (fiber) optics may be used for both laser processes.

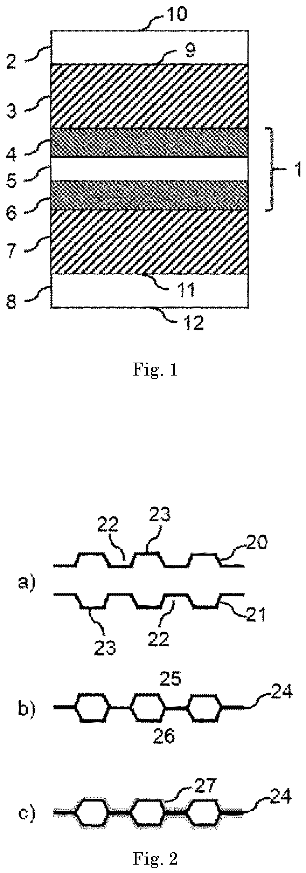

A known method to produce bipolar plates from metal sheet material is to provide channels are formed in a plate, for instance by stamping, molding or hydroforming. After creating the channels in the plate, two plates are formed into a bipolar plate, for instance using laser welding. Laser welding is preferably performed under an inert atmosphere. The process of joining an anode plate and a cathode plate with channels into a bipolar plate is illustrated in figure 2. Bipolar plates have two opposites sides, one of which will act as a cathode, and one of which will act as an anode in an electrochemical reactor.

Making the plates from metal sheet material can advantageously be performed a so-called roll-to-plate process, which involves providing a flat metal sheet, rolled it out into a plate. Subsequently,

In a roll-to-plate process, the production of bipolar plates can be performed continuously, and the bipolar plates can be cut to the desired size.

In embodiments, the metal sheet material has a thickness of 50-5000 µm, preferably, 100-1000 µm, such as 200-500 µm.

Preferably, the metal sheet material comprises titanium. In order to facilitate laser nitridation, it is preferred that at least the outer surface of the metal sheet material is titanium.

By combining the laser nitridation step and the laser welding step as described above, it is not necessary to take out the bipolar plates from the laser welding equipment, and to transport them to different equipment for to apply a coating or *vice versa.* In addition, because the coating is produced by chemical reaction of the outer layer of the bipolar plate, there is also no need for complex surface cleaning and surface preparation prior to the coating.

Preferably, the laser nitridation step is performed in 15 minutes or less, preferably 10 minutes or less, more preferably 5 minutes or less. This is beneficial for large-scale production of these bipolar plates. During this time, a thick enough coating for protecting the titanium, such as a coating with an average thickness of 50 nm or more, is preferably produced. Depending e.g. on laser power and spot size, laser nitridation can even be performed in 3 minutes or less, or 2 minutes or less, or 1 minute or less.

According to a second aspect of the invention, there is provided a bipolar plate comprising metallic titanium covered by a titanium nitride coating layer, obtainable using the method described herein.

Preferably, the titanium nitride coating of the bipolar plate has an average thickness of 50 nm or more, such as 100 nm or more. Because of the good chemical stability, it is not necessary for the titanium nitride coating to be very thick. Therefore, the titanium nitride coating may have an average thickness of 5000 nm or less. For instance, the titanium nitride coating may have an average thickness of 100-3000 nm.

The size of the bipolar plate may be chosen to match the electrochemical reactor in which it should be applied, typically, the bipolar plate has a length and/or width of 1 cm or more, such as 5 cm or more, or 10 cm or more. As long as the bipolar plate is structurally solid, there is no upper size limit for the bipolar plate. Typically, however, the bipolar plate has a length and/or width of 200 cm or less, or 100 cm or less.

In embodiments, the geometric surface area of the bipolar plate (*i.e*., the surface area based on the dimensions of the without taking channels into account) per side of the bipolar plate is 1.0-10000 cm², preferably 100-2000 cm².

As explained above, because the coating is applied using laser nitridation instead of deposition, the interface between metallic titanium and the titanium nitride coating comprises a gradient of decreasing Ti : N ratio towards the outer surface of the bipolar plate. Preferably, the thickness of the region where such a gradient is observed is 5 nm or more, preferably 10 nm or more, such as 10-500 nm or 20-200 nm.

An electrochemical reactor with one or more bipolar plates as described herein is also provided.

Different kinds of electrochemical reactors can be equipped with bipolar plates according to the invention. Preferably, the electrochemical reactors in which the bipolar plates can be used are selected from the group consisting of a proton-exchange membrane water electrolyzer and a fuel cell.

There is also provided the use of a bipolar plate obtainable using the method as described herein and/or a bipolar plate as described herein in an electrochemical reactor, wherein the electrochemical reactor is preferably selected from the group consisting of an electrolyzer and a fuel cell.

The resulting titanium nitride coating can be used to provide high quality protection of the bipolar plate in both electrolyzers and fuel cells, at the cathode side, at the anode side, or both.

By using laser nitridation to create high quality titanium nitride coatings, expensive noble metal coatings on bipolar plates can be replaced, leading to significant cost reductions.

The coating may also serve as interface between Ti substrate and noble metal coating. TiN terminated surfaces according to the invention can subsequently be coated with Ir or Pt. Thanks to the TiN coating, thinner layers of Ir or Pt can be sufficient to protect the bipolar plates from oxidizing and/or suffering from hydrogen embrittlement.

Alternatively or additionally, the titanium nitride coating can serve as a substrate for further coating layers.

Depending on the type of electrochemical reactor, and depending on the side (*i.e*., the cathode or anode side), the coating may serve different purposes. In a fuel cell, hydrogen is typically applied to the anode, and the TiN coating can serve to protect the anode side of the bipolar plate against hydrogen embrittlement. On the cathode side of a fuel cell, where oxygen is typically applied, the TiN coating protects the cathode side of the bipolar plate against oxidation. Conversely, in an electrolyzer, hydrogen is typically formed at the cathode, meaning that the TiN coating can be used to protect the cathode against hydrogen embrittlement. On the anode side of an electrolyzer, oxygen is formed, and the TiN coating can be used to protect the anode side of the bipolar plate against oxidation. Compared to fuel cells, which typically operate in a voltage range of ca. 0.6-1.0 V, the conditions in electrolyzers are typically harsher. Electrolyzers typically operate at 1.5 V or more. Under these conditions, especially at the anode side at which oxygen is formed, the chemical stability of the TiN coating according to the invention may not always be enough to prevent oxidation and titanium oxynitrides may be formed. Therefore, the bipolar plate may be provided with a noble metal coating on top of the TiN coating on one or both sides of the bipolar plate. Alternatively, or additionally, the bipolar plate may also comprise a noble metal coating instead of the TiN coating on the anode or cathode side of the bipolar plate.

In addition, the TiN coating may enhance the wettability of the bipolar plate, which leads to better distribution and/or removal of gases. It is believed that the wettability is enhanced because the nanostructured surface of TiN decreases the water contact angle.

Apart from being used in electrolyzers and fuel cells, the bipolar plates can be used in other electrochemical devices including but not limited to devices for CO₂ reduction, NH₃ production, H₂O₂ generation, etc.

Figure 1 is a schematic representation of a cross section of a single cell of an electrochemical membrane reactor. Membrane Electrode Assembly (1) comprises ion-exchange membrane (5), for instance a perfluorosulfonic acid membrane, and two catalyst layers (4, 6). Adjacent to the membrane on one side, typically referred to as the anode side, is anode catalyst layer (4). Similarly, on the cathode side, cathode catalyst layer (6) is placed adjacent to the membrane. Adjacent to each catalyst layer a porous transport layer (3, 7) is located. On the cathode side, the porous transport layer (7) is typically made of carbon, and on the anode side, the porous transport layer (3) is typically made of titanium. Adjacent to each porous transport layer, a bipolar plate (2, 8) is located. On the anode side of the cell, anode side (9) of bipolar plate (2) faces the side of the membrane where the anode catalyst layer (4) is located, whereas cathode side (10) of bipolar plate (2) faces the cathode catalyst layer of an adjacent cell (not shown) in case the cell is placed in a stack. Similarly, cathode side (11) of bipolar plate (8) faces the side of the membrane where the cathode catalyst layer (6) is located, and anode side (12) of bipolar plate (8) faces the anode catalyst layer of an adjacent cell (not shown) in case the cell is placed in a stack.

Figure 2 is a schematic representation of the production of a bipolar plate with a coating. Figure 2a shows cathode plate (20) and anode plate (21), which are both provided with channels (22) and lands (23). In Figure 2b, the plates are combined, for instance using laser welding, into bipolar plate (24) having cathode side (25) and cathode side (26). Cathode side (25) and anode side (26) of the bipolar plate may be interchangeable, for instance in case cathode plate (20) and anode plate (21) are identical. Figure 2c shows titanium nitride coating (27) applied onto bipolar plate (24). In figure 2c, both the cathode side and the anode side are coated. It will be appreciated that it is also possible to apply the coating only to one of the sides.

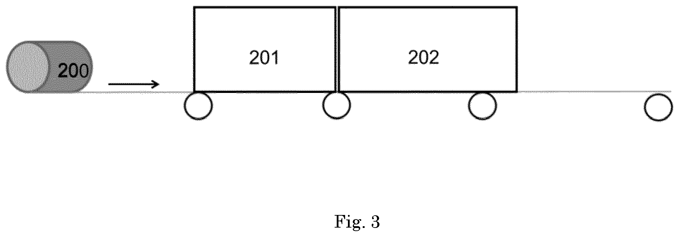

Figure 3 is a schematic representation of production of a bipolar plate with a coating in a roll-to-plate process starting from a roll (200) of sheet material. Channels are added to the plate of metal sheet material in channel forming unit (201). Subsequently, the plates are combined into a bipolar plate using laser welding and coated using laser nitridation in laser unit (202).

The use of the terms "a" and "an" and "the" and similar referents in the context of describing the invention (especially in the context of the claims) are to be construed to cover both the singular and the plural, unless otherwise indicated herein or clearly contradicted by context. The terms "comprising", "having", "including" and "containing" are to be construed as open-ended terms (*i.e*., meaning "including, but not limited to") unless otherwise noted. Recitation of ranges of values herein is merely intended to serve as a shorthand method of referring individually to each separate value falling within the range, unless otherwise indicated herein, and each separate value is incorporated into the specification as if it were individually recited herein. The use of any and all examples, or exemplary language (*e.g*., "such as") provided herein, is intended merely to better illuminate the invention and does not pose a limitation on the scope of the invention unless otherwise claimed. No language in the specification should be construed as indicating any non-claimed element as essential to the practice of the invention. For the purpose of the description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

## Claims

1. Method for coating a bipolar plate, comprising the steps of:
- providing a bipolar plate wherein at least the outside layer of the bipolar plate comprises metallic titanium;
- subjecting the bipolar plate to laser nitridation, thereby forming a coating of titanium nitride on the outer surface of the bipolar plate.

2. Method according to claim 1, wherein the atomic ratio of titanium : nitrogen in the outer 50 nm of the titanium nitride layer is 0.8 : 1.0 - 1.2 : 1.0.

3. Method according to claim 1 or 2, wherein laser nitridation is performed using a pulsed or continuous diode laser.

4. Method according to any one of claims 1-3, wherein laser nitridation is performed using a laser having a wavelength in the range of 900-2000 nm.

5. Method according to any one of claims 1-4, wherein the laser source has a power of 500-50000 W, preferably 5000-25000 W.

6. Method according to any one of claims 1-5, wherein the spot size of the laser is 10-10000 mm².

7. Method according to any one of claims 1-6, wherein laser nitridation is carried out in an atmosphere with an oxygen of 100 ppm or less, preferably 30 ppm or less.

8. Method according to any one of claims 1-7, further comprising the steps of:
- providing at least two plates of metal sheet material;
- introducing channels in the plates, preferably by stamping and/or hydroforming, thereby creating one or more channels and one or more lands in each plate; and
- joining the plates to yield a bipolar plate, preferably by laser welding.

9. Method according to claims 8, wherein the metal sheet material is provided in the form of a roll.

10. Method according to any one of claims 1-9, wherein the laser nitridation step is performed in 15 minutes or less, preferably 10 minutes or less, more preferably 5 minutes or less.

11. Bipolar plate comprising metallic titanium covered by a titanium nitride coating, obtainable using the method according to any one of claims 1-10.

12. Bipolar plate according to claim 11, wherein the titanium nitride coating has an average thickness of 100-5000 nm, preferably 500-3000 nm

13. Bipolar plate according to claim 11 or 12, wherein the interface between metallic titanium and the titanium nitride coating comprises a gradient of decreasing Ti : N ratio towards the outer surface of the bipolar plate.

14. Electrochemical reactor comprising one or more bipolar plates according to any one of claims 11-13, wherein the electrochemical reactor is preferably selected from a proton-exchange membrane water electrolyzer and a fuel cell.

15. Use of a bipolar plate obtainable using the method according to any one of claims 1-10 and/or a bipolar plate according to any one of claims 11-13 in an electrochemical reactor, wherein the electrochemical reactor is preferably selected from the group consisting of an electrolyzer and a fuel cell.
